# EUROPÄISCHE PATENTSCHRIFT

(11) **EP 0 651 164 B1**
(45) Veröffentlichungstag und Bekanntmachung des Hinweises auf die Patenterteilung: **23.07.1997**
(21) Anmeldenummer: 94114237.4
(22) Anmeldetag: 09.09.1994
(51) Int. Cl.: F16B 21/08, G08B 3/10

(54) **Mobiltelefon mit Befestigungsvorrichtung**
Mobile telephone with fastening element
Téléphone mobile avec dispositif de fixation

(30) Priorität: 29.10.1993 DE 4336949
(43) Veröffentlichungstag der Anmeldung: 03.05.1995
(73) Patentinhaber: Hagenuk Telecom GmbH, 24118 Kiel (DE)
(72) Erfinder: Behl, Christoph, Dipl.-Ing., D-24534 Neumünster (DE)
(74) Vertreter: Hansmann, Dierk, Dipl.-Ing.

(56) Entgegenhaltungen:
- EP-A- 0 459 021
- EP-A- 0 552 962
- DE-A- 3 346 503

## Beschreibung

Die Erfindung betrifft ein Mobiltelefon mit einer Befestigungsvorrichtung zum Aufhängen an einem Träger, bei dem die Befestigungsvorrichtung als eine Lasche ausgebildet ist, die im Bereich einer Laschenbasis mit einem Gehäuse des Mobiltelefons verbunden und im Bereich eines der Laschenbasis abgewandt angeordneten Laschenkopfes relativ zum Gehäuse federnd beweglich ist.

Aufgrund der Verkleinerung der Bauformen von Mobiltelefonen ist es möglich, die Mobiltelefone mit Hilfe einer Lasche unmittelbar an der Kleidung eines Benutzers zu befestigen. Die Lasche kann dabei entsprechend einem Clip beispielsweise hinter einen Saum geklemmt werden. Bekannt ist es, die Lasche mit einer Klammer am Mobilteil derart zu befestigen, daß die Klammer das Mobilteil umfaßt. Darüber hinaus ist es auch möglich, die Lasche mit dem Gehäuse des Mobiltelefones zu verkleben oder eine kraftschlüssige Verbindung vorzusehen.

Die bekannten Befestigungen zur Verbindung der Lasche mit dem Gehäuse des Mobiltelefones sind jedoch nicht dafür geeignet, derart flexibel benutzt zu werden, daß einerseits eine einfache Montage gewährleistet ist, und andererseits sowohl eine Verwendung des Mobiltelefons mit der Lasche als auch eine Verwendung ohne die Lasche in technisch funktioneller und optisch ansprechender Weise möglich ist.

Nach der DE-A-33 46 503 ist eine Rastverbindung bekannt, wobei ein Zwischenteil, beispielsweise eine Leiterplatte, auf eine rohrförmige Aufnahme aufgerastet wird und durch anschließendes Aufdrücken von federnden Rastelementen als Stege mit Rasthaken eine endgültige Verbindung der Teile erzielbar ist.

Aufgabe der vorliegenden Erfindung ist es daher, ein Mobiltelefon der einleitend genannten Art derart zu konstruieren, daß sowohl eine dauerhaft funktionsfähige als auch eine universell verwendbare Verbindung der Lasche mit dem Mobiltelefon bereitgestellt wird.

Diese Aufgabe wird erfindungsgemäß dadurch gelöst, daß das Befestigungselement in eine Befestigungsöffnung des Gehäuses eingreift und im Bereich eines über die Lasche hinausragenden Endes mit einem eine Elementdurchführung der Lasche überkragenden Elementkopf versehen ist und das Befestigungselement im Bereich seines dem Elementkopf abgewandten Endes mit seitlich überstehenden Befestigungsvorsprüngen versehen ist und die Lasche durch die Befestigungsöffnung hindurchgehende Laschenstege aufweist, die mit in den Gehäuseinnenraum hineinragende Laschenvorsprünge versehen sind, die einen Rand der Befestigungsöffnung hintergreifen und daß die Laschenstege durch einen Schaft am Elementkopf, der durch hineinragt, gegenführung in die Befestigungsöffnung hineinragt, gegenüber dem Gehäuse verspannt sind.

Durch die ineinander eingreifenden Bauelemente und die Anordnung der Vorsprünge ist es möglich, sowohl eine Benutzung des Mobiltelefones mit der Lasche als auch eine Benutzung ohne die Lasche vorzunehmen. Sowohl der Montage- als auch der Demontagevorgang sind mit geringem Zeitaufwand durchführbar. Insbesondere ist es auch möglich, das Befestigungselement bei einer Nichtverwendung der Lasche in die Befestigungsöffnung einzuführen und durch den Elementkopf eine Abdeckung der Befestigungsöffnung vorzunehmen. Hierdurch wird ein optisch geschlossenes Erscheinungsbild gewährleistet.

Durch die Kombination des Gehäuses, der Lasche und des Befestigungselementes wird eine formschlüssige Verriegelung zwischen der Lasche und dem Gehäuse bereitgestellt. Hierdurch wird eine hohe Gebrauchssicherheit gewährleistet.

Eine symmetrische Krafteinleitung in das Gehäuse wird dadurch ermöglicht, daß das Gehäuse im Bereich der Befestigungsöffnung mit zwei Gehäusestegen versehen ist, die sich in einen Gehäuseinnenraum hineinerstrecken und im wesentlichen parallel zueinander angeordnet sind.

Zur Aufnahme von typischen Belastungen bei einer Benutzung wird vorgeschlagen, daß die Gehäusestege im wesentlichen quer zu einer Längsachse der Lasche angeordnet sind.

Eine definierte Positionierung des Befestigungselementes in einem demontierten Zustand der Lasche kann dadurch gewährleistet werden, daß die Gehäusestege im Bereich ihrer in den Gehäuseinnenraum hineinragenden Ausdehnung mit einer Profilierung zur Aufnahme von Befestigungsvorsprüngen des Befestigungselementes versehen sind.

Eine verkippsichere Anordnung der Lasche kann dadurch gewährleistet werden, daß die Lasche mit zwei Laschenstegen versehen ist, die sich im wesentlichen parallel zueinander erstrecken.

Eine ausreichende Abstützung der Lasche bei Biegebelastungen kann dadurch gewährleistet werden, daß die Laschenstege im wesentlichen in Richtung der Längsachse orientiert sind.

Eine einfache geometrische Anordnung der ineinander eingreifenden Elemente kann dadurch gewährleistet werden, daß der Elementschaft eine im wesentlichen rechteckförmige Kontur aufweist und bereichsweise einen Hohlraum umschließt.

Eine zuverlässige Fixierung des Befestigungselementes erfolgt dadurch, daß die Befestigungsvorsprünge jeweils an einer Elementenlasche angeordnet sind, die blattfederartig mit dem Elementkopf verbunden ist und daß zwei parallel zueinander angeordnete Elementlaschen vorgesehen sind.

Für eine aneinander angepaßte Dimensionierung der Bauelemente ist es insbesondere zweckmäßig, daß die Elementenlaschen quer zur Längsachse eine Dimensionierung aufweisen, die im wesentlichen einer Dimensionierung einer Mittelvertiefung der Profilierung quer zur Längsachse entspricht.

Für eine Positionierung des Befestigungselementes in einem montierten Zustand der Lasche ist es zweckmäßig, daß das Gehäuse im Bereich der Befestigungsöffnung eine die Befestigungsvorsprünge des Befestigungselementes in einem montierten Zustand der Lasche aufnehmende Öffnungserweiterung aufweist.

Eine definierte Positionierung des Befestigungselementes sowohl in einem montierten als auch in einem demontierten Zustand der Lasche wird dadurch unterstützt, daß die Befestigungsvorsprünge relativ zum Elementkopf einen Abstand aufweisen, der dem Abstand einer dem Elementkopf zugewandten Oberfläche der Lasche zu einer in Richtung auf den Gehäuseinnenraum orientierten Begrenzungsfläche der Mittelvertiefung entspricht.

In der Zeichnung sind Ausführungsbeispiele der Erfindung schematisch dargestellt. Es zeigen:
- Fig. 1:: ein teilweise Darstellung eines Längsschnitt durch ein Gehäuse des Mobiltelefones mit demontierter Lasche
- Fig. 2:: einen Querschnitt gemäß Schnittlinie II-II in Fig. 1,
- Fig. 3:: ein Längsschnitt gemäß Fig. 1 mit demontierter Lasche und in die Befestigungsöffnung eingeführtem Befestigungselement
**und**
- Fig. 4:: einen Querschnitt gemäß Schnittlinie IV-IV in Fig. 3.

Das Mobiltelefon ist mit einem Gehäuse (1) versehen, in dem eine Befestigungsöffnung (2) angeordnet ist. In die Befestigungsöffnung (2) greift eine Lasche (3) mit Laschenstegen (4) ein, die die Lasche (3) durch Laschenvorsprünge (5) relativ zum Gehäuse (1) fixieren.

Eine Verspannung der Laschenstege (4) relativ zum Gehäuse (1) erfolgt mit Hilfe eines Befestigungselementes (6). Das Befestigungselement (6) weist einen Elementkopf (7) und einen Elementschaft (8) auf, der eine Elementdurchführung (9) der Lasche (3) durchdringt. Der Elementkopf (7) überkragt die Elementdurchführung (9) und liegt an einer Außenfläche (10) der Lasche (3) an.

Die Lasche (3) besteht im wesentlichen aus einer im Bereich der Befestigungsöffnung (2) angeordneten Laschenbasis (11), einem sich in Richtung einer Längsachse (12) erstreckenden Laschenkörper (13) sowie einem abgewandt zur Laschenbasis (11) angeordneten Laschenkopf (14). Der Laschenkörper (13) verläuft mit einem Abstand zum Gehäuse (1).

Im Bereich der Befestigungsöffnung (2) weist das Gehäuse (1) Gehäusestege (15) auf, die in einen Gehäuseinnenraum (16) hineinragen. Im Bereich seiner der Elementdurchführung (9) zugewandten Ausdehnung ist das Gehäuse (1) mit einer Öffnungserweiterung (17) versehen, die in einem montierten Zustand der Lasche (3) Befestigungsvorsprünge (18) aufnimmt, die das Befestigungselement (6) im Bereich seiner dem Elementkopf (7) abgewandten Ausdehnung aufweist.

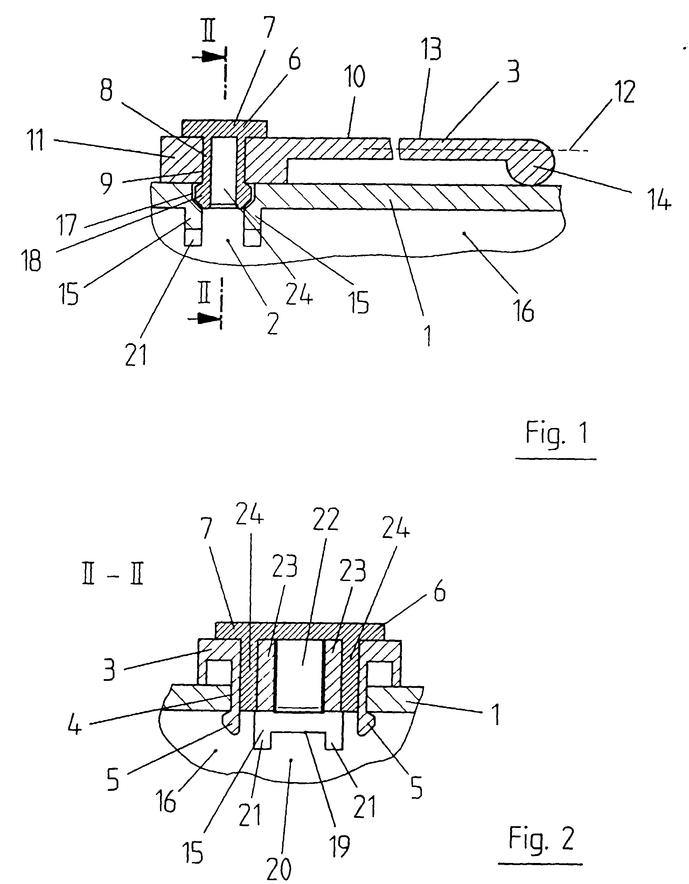

Aus der Darstellung in Fig. 2 ist ersichtlich, daß der Gehäusesteg (15) im Bereich seiner in den Gehäuseinnenraum (16) hineinragenden Ausdehnung mit einer Profilierung (19) versehen ist, durch die eine Mittelvertiefung (20) von zwei Seitenstegen (21) begrenzt ist. Die Entfernung der Seitenstege (21) voneinander ist derart dimensioniert, daß die Mittelvertiefung (20) den Befestigungsvorsprung (18) derart aufnehmen kann, daß der Befestigungsvorsprung (18) die in den Gehäuseinnenraum (16) hineinweisende Begrenzung der Mittelvertiefung (20) hintergreift und eine Fixierung des Befestigungsvorsprunges (18) durch die Seitenstege (21) vorgenommen wird.

Zur Bereitstellung von federnden Eigenschaften des Befestigungselementes (6) im Bereich des Befestigungsvorsprunges (18) ist der Befestigungsvorsprung (18) über eine Elementlasche (22) mit dem Elementkopf (7) verbunden. Der Elementschaft (8) ist als ein im wesentlichen quaderförmiger Hohlkörper ausgebildet, so daß die Elementlasche (22) in einen vom Elementschaft (8) aufgespannten Hohlraum hineinfedern kann. Zur Verleihung von federnden Eigenschaften für den Laschensteg (4) kann die Laschenbasis (11) als ein sich im wesentlichen in Richtung der Längsachse (12) erstreckendes u-Profil ausgebildet sein, das einen von den Laschenstegen (4) durchdrungenen Innenraum aufweist.

Eine weitere Versteifung kann dadurch erfolgen, daß die Laschenbasis (11) mit Versteifungsstegen (23) versehen ist, die die Elementdurchführung (9) in Richtung der Längsachse (12) durchqueren. Die Versteifungsstege (23) weisen zueinander einen Abstand auf, der eine federnde Bewegung des Befestigungsvorsprunges (18) zuläßt. Zu den Laschenstegen (14) weisen die Versteifungsstege (23) einen Abstand derart auf, daß das Befestigungselement (6) mit Arretierungsstegen (24), die gemeinsam mit den Elementlaschen (22) den Elementschaft (8) ausbilden, zwischen die Versteifungsstege (23) und die Laschenstege (4) geführt werden kann.

Sowohl die Elementlaschen (22) als auch die Laschenstege (4) und die Gehäusestege (15) sind jeweils paarweise einander gegenüber und im wesentlichen parallel zueinander angeordnet. Die jeweiligen Abstände sind dadurch festgelegt, daß ein Ineinanderfügen der Elemente ermöglicht wird.

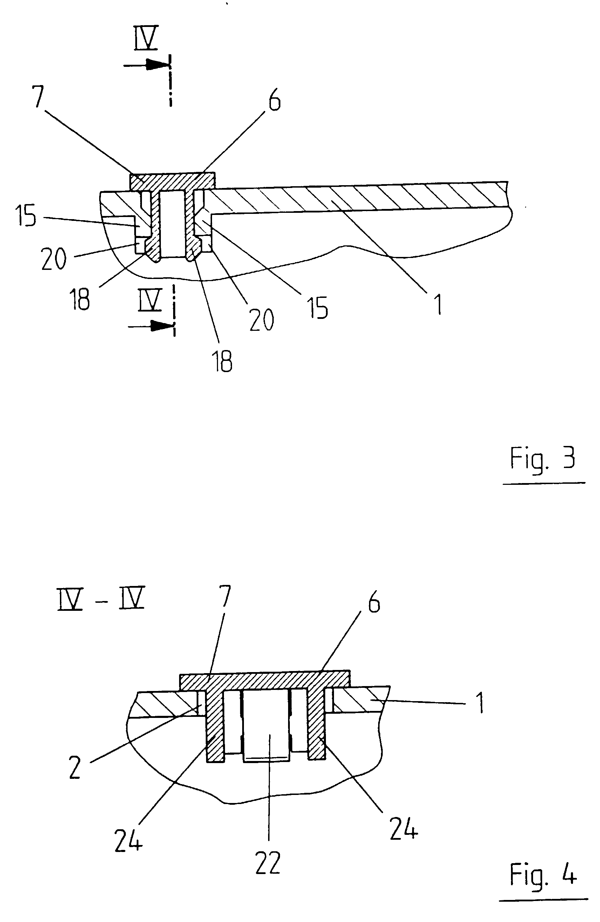

Fig. 3 zeigt einen Längsschnitt durch das Gehäuse (1) in einem demontierten Zustand der Lasche (3). Das Befestigungselement (6) ist mit seinem Elementschaft (8) in die Befestigungsöffnung (2) eingeführt und hintergreift mit den Befestigungsvorsprüngen (18) die Gehäusestege (15) im Bereich der Mittelvertiefung (20). Mit seinem Elementkopf (7) liegt das Befestigungselement (6) am Gehäuse (1) an.

## Patentansprüche

1. Mobiltelefon mit einer Befestigungsvorrichtung zum Aufhängen an einem Träger, bei dem die Befestigungsvorrichtung als eine Lasche (3) ausgebildet ist, die im Bereich einer Laschenbasis (11) mit einem Gehäuse (1) des Mobiltelefons über ein Befestigungselement (6) verbunden und im Bereich eines der Laschenbasis (11) abgewandt angeordneten Laschenkopfes (14) relativ zum Gehäuse (1) federnd beweglich ist, dadurch gekennzeichnet, daß das Befestigungselement (6) in eine Befestigungsöffnung (2) des Gehäuses (1) eingreift und im Bereich eines über die Lasche (3) hinausragenden Endes mit einem eine Elementdurchführung der Lasche (3) überkragenden Elementkopf (7) versehen ist und das Befestigungselement (6) im Bereich seines dem Elementkopf (7) abgewandten Endes mit seitlich überstehenden Befestigungsvorsprüngen (18) versehen ist und die Lasche (3) durch die Befestigungsöffnung (2) hindurchgehende Laschenstege (4) aufweist, die mit in den Gehäuseinnenraum hineinragende Laschenvorsprünge (5) versehen sind, die einen Rand der Befestigungsöffnung (2) hintergreifen und daß die Laschenstege (4) durch einen Schaft (8) am Elementkopf (7), der durch die Elementdurchführung (9) in die Befestigungsöffnung (2) hineinragt, gegenüber dem Gehäuse verspannt sind.

2. Mobiltelefon nach Anspruch 1, dadurch gekennzeichnet, daß das Gehäuse (1) im Bereich der Befestigungsöffnung (2) mit zwei Gehäusestegen (15) versehen ist, die sich in einen Gehäuseinnenraum (16) hineinerstrecken und im wesentlichen parallel zueinander angeordnet sind.

3. Mobiltelefon nach Anspruch 2, dadurch gekennzeichnet, daß die Gehäusestege (15) im wesentlichen quer zu einer Längsachse (12) der Lasche (3) angeordnet sind.

4. Mobiltelefon nach einem der Ansprüche 1 bis 3, dadurch gekennzeichnet, daß die Gehäusestege (15) im Bereich ihrer in den Gehäuseinnenraum (16) hineinragenden Ausdehnung mit einer Profilierung (19) zur Aufnahme von Befestigungsvorsprüngen (18) des Befestigungselementes (6) versehen sind.

5. Mobiltelefon nach einem der Ansprüche 1 bis 4, dadurch gekennzeichnet, daß die Lasche (3) mit zwei Laschenstegen (4) versehen ist, die sich im wesentlichen parallel zueinander erstrecken.

6. Mobiltelefon nach Anspruch 5, dadurch gekennzeichnet, daß die Laschenstege (4) im wesentlichen in Richtung der Längsachse (12) orientiert sind.

7. Mobiltelefon nach einem der Ansprüche 1 bis 6, dadurch gekennzeichnet, daß der Elementschaft (8) eine im wesentlichen rechteckförmige Kontur aufweist und bereichsweise einen Hohlraum umschließt.

8. Mobiltelefon nach einem der Ansprüche 1 bis 7, dadurch gekennzeichnet, daß die Befestigungsvorsprünge (18) jeweils an einer Elementlasche (22) angeordnet sind, die blattfederartig mit dem Elementkopf (7) verbunden ist und daß zwei parallel zueinander angeordnete Elementlaschen (22) vorgesehen sind.

9. Mobiltelefon nach Anspruch 8, dadurch gekennzeichnet, daß die Elementlaschen (22) quer zur Längsachse (12) eine Dimensionierung aufweisen, die im wesentlichen eine Dimensionierung einer Mittelvertiefung (20) der Profilierung (19) quer zur Längsachse (12) entspricht.

10. Mobiltelefon nach einem der Ansprüche 1 bis 9, dadurch gekennzeichnet, daß das Gehäuse (1) im Bereich der Befestigungsöffnung (2) eine die Befestigungsvorsprünge (18) des Befestigungselementes (6) in einem montierten Zustand der Lasche (3) aufnehmende Öffnungserweiterung (17) aufweist.

11. Mobiltelefon nach einem der Ansprüche 1 bis 10, dadurch gekennzeichnet, daß die Befestigungsvorsprünge (18) relativ zum Elementkopf (7) einen Abstand aufweisen, der dem Abstand einer dem Elementkopf (7) zugewandten Oberfläche der Lasche (3) zu einer in Richtung auf den Gehäuseinnenraum (16) orientierten Begrenzungsfläche der Mittelvertiefung (20) entspricht.

## Claims

1. Mobile telephone with a mounting device for suspension on a support, in which the mounting device is constructed as a clip (3) that in the region of a clip base (11) is connected to a housing (1) of the mobile telephone via a fastening element (6) and in the region of a clip head (14) facing away from the clip base (11), has spring movement relative to the housing (1), **characterised in that** the fastening element (6) engages in a mounting hole (2) of the housing and in the region of an end projecting beyond the clip (3) is provided with an element head (7) overhanging the element bushing of the clip (3) and in the region of its end facing away from the element head (7) the fastening element (6) is provided with laterally projecting locking projections (18), and the clip (3) has clip webs (4) passing through the mounting hole (2), that are provided with clip projections (5) projecting into the inside of the housing, which engage with one edge of the mounting hole (2), and that the clip webs (4) are braced against the housing by a shank (8) at the element head (7), which projects through the element bushing (9) into the mounting hole (2).

2. Mobile telephone according to Claim 1, **characterised in that** in the region of the mounting hole (2) the housing (1) is provided with two housing webs (15) which extend inwards into the inside of the housing (16) and are arranged substantially parallel to each other.

3. Mobile telephone according to Claim 2, **characterised in that** the housing webs (15) are arranged substantially at right-angles to a longitudinal axis (12) of the clip (3).

4. Mobile telephone according to one of Claims 1 to 3, **characterised in that** in the region of their extension into the inside of the housing (16), the housing webs (15) are provided with a profile section (19) to accept locking projections (18) of the fastening element (6).

5. Mobile telephone according to one of Claims 1 to 4, **characterised in that** the clip (3) is provided with two clip webs (4), which extend substantially parallel to each other.

6. Mobile telephone according to Claim 5, **characterised in that** the clip webs (4) are aligned substantially in the direction of the longitudinal axis (12).

7. Mobile telephone according to one of Claims 1 to 6, **characterised in that** the element shank (8) has a substantially rectangular contour and encloses a hollow space.

8. Mobile telephone according to one of Claims 1 to 7, **characterised in that** each of the locking projections (18) is arranged on an element web (22), which is connected in the manner of a leaf spring to the element head (7), and that two element webs (22), that are arranged in parallel with each other, are provided.

9. Mobile telephone according to Claim 8, **characterised in that** the element webs (22) have a dimension at right-angles to the longitudinal axis (12), which substantially corresponds to a dimension of a central recess (20) of the profile section (19) at right-angles to the longitudinal axis (12).

10. Mobile telephone according to one of Claims 1 to 9, **characterised in that** in the region of the mounting hole (2) the housing (1) has an enlarged opening (17) accepting the locking projections (18) of the mounting elements (6) in the mounted condition of the clip (3).

11. Mobile telephone according to one of Claims 1 to 10, **characterised in that** the locking projections (18) have a distance relative to the element head (7) that corresponds to the distance from a surface of the clip (3) facing the element head (7), to a boundary surface of the central recess (20) aligned in the direction of the inside of the housing (16).

## Revendications

1. Téléphone mobile muni d'un dispositif de fixation destiné à la suspension à un porteur, dans le cas duquel le dispositif de fixation a été prévu sous la forme d'une patte (3) qui dans la zone d'une base (11) de la patte, est reliée à un boîtier (1) du téléphone mobile par l'intermédiaire d'un élément de fixation (6) et qui, dans la zone d'une tête (14) de la patte, prévue en opposition à la base (11) de la patte, est mobile élastiquement, par un effet de ressort, par rapport au boîtier (1), le téléphone mobile étant caractérisée en ce que l'élément de fixation (6) se place en engagement avec une ouverture de fixation (2) du boîtier (1) et, dans la zone d'extrémité qui dépasse la patte (3), est muni d'une tête d'élément (7) qui prend de dessus un passage de guidage d'élément à la patte (3), en ce que l'élément de fixation (6), dans la zone de son extrémité en opposition par rapport à la tête d'élément (7), est muni de saillies de fixation (18) qui en ressortent latéralement, et en ce que la patte (3) est munie de nervures (4) qui traversent l'ouverture de fixation (2), nervures (4) qui sont munies de saillies d'attache (5) qui s 'engagent dans l'espace interne du boîtier, saillies d'attache (5) qui prennent de l'arrière un bord de l'ouverture de fixation (2) et en ce que les nervures (4) sont maintenues serrées par rapport au boîtier par une tige (8) que comporte la tête d'élément (7) et qui s'avance, par le passage d'ouverture (9) de l'élément, dans l'ouverture de fixation (2).

2. Téléphone mobile suivant la revendication 1, caractérisé en ce que le boîtier (1) est muni, dans la zone de l'ouverture de fixation (2) de deux nervures de boîtier (15) qui s'avancent dans un espace interne (16) du boîtier et qui ont été prévues essentiellement parallèles l'une à l'autre.

3. Téléphone mobile suivant la revendication 2, caractérisé en ce que les nervures (15) du boîtier ont été prévues essentiellement transversales à un axe longitudinal (12) de la patte (3).

4. Téléphone mobile suivant l'une quelconque des revendications 1 à 3, caractérisé en ce que les nervures (15) du boîtier, dans la zone de leur partie de prolongement qui s'avance dans l'espace interne (16) du boîtier, sont munies d'une partie profilée (19) qui est destinée à recevoir et à contenir des saillies de fixation (18) de l'élément de fixation (6).

5. Téléphone mobile suivant l'une quelconque des revendications 1 à 4, caractérisé en ce que la patte (3) est munie de deux nervures de patte (4) qui suivent des directions essentiellement parallèles l'une par rapport à l'autre.

6. Téléphone mobile suivant la revendication 5, caractérisé en ce que les nervures (4) de la patte sont orientées essentiellement en direction de l'axe longitudinal (12).

7. Téléphone mobile suivant l'une quelconque des revendications 1 à 6 caractérisé en ce que la tige (8) de l'élément présente un contour essentiellement rectangulaire et délimite localement un espace creux.

8. Téléphone mobile suivant l'une quelconque des revendications 1 à 7, caractérisé en ce que le saillies de fixation (18) sont prévues chacune à une patte (22) de l'élément qui est reliée comme une lame de ressort à la tête (7) de l'élément et en ce qu'il a été prévu deux pattes d'élément (22) qui se trouvent en parallèle l'une par rapport à l'autre.

9. Téléphone mobile suivant la revendication 8, caractérisé en ce que les pattes (22) de l'élément présentent, dans le sens transversal par rapport à l'axe longitudinal (12), un dimensionnement qui correspond essentiellement à un dimensionnement d'un creux médian (20) de la partie profilée (19) dans le sens transversal par rapport à l'axe longitudinal (12).

10. Téléphone mobile suivant l'une quelconque des revendications 1 à 9, caractérisé en ce que le boîtier (1) présente dans la zone d'ouverture de fixation (2), un élargissement d'ouverture (17) qui reçoit et contient les saillies de fixation (18) de l'élément de fixation (6) lorsque la patte (3) se trouve à l'état monté.

11. Téléphone mobile suivant l'une quelconque des revendications 1 à 10, caractérisé en ce que les saillies de fixation (18) présentent par rapport à la tête (7) de l'élément, une distance d'écartement qui correspond à la distance d'écartement d'une surface de la patte (3) tournée vers la tête (7) de l'élément par rapport à une face de délimitation du creux médian (20) qui est orientée en direction de l'espace interne (16) du boîtier.
